# EUROPEAN PATENT SPECIFICATION

(11) **EP 2 500 968 B1**
(45) Date of publication and mention of the grant of the patent: **14.01.2015**
(21) Application number: 10827876.3
(22) Date of filing: 26.10.2010
(51) Int. Cl.: H01M 4/525, H01M 4/131, H01M 10/0525, H01M 4/04, H01M 4/1391, H01M 4/36, H01M 4/50, H01M 4/52, C01G 51/00, C01G 53/00, H01M 4/505, C01G 45/12

(54) **POLYCRYSTALLINE COBALT-NICKEL-MANGANESE TERNARY POSITIVE MATERIAL, PREPARATION METHOD THEREOF AND LITHIUM ION SECONDARY BATTERY**
POLYKRISTALLINES TERNÄRES KOBALT-NICKEL-MANGAN-POSITIVMATERIAL, VERFAHREN ZU SEINER HERSTELLUNG UND LITHIUMIONEN-SEKUNDÄRBATTERIE DAMIT
MATÉRIAU POSITIF TERNAIRE DE COBALT-NICKEL-MANGANÈSE POLYCRISTALLIN, SON PROCÉDÉ DE PRÉPARATION ET BATTERIE RECHARGEABLE AU LITHIUM-ION

(30) Priority: 09.11.2009 CN 200910110132
(43) Date of publication of application: 19.09.2012
(73) Proprietor: Shenzhen Zhenhua New Material Co., Ltd., Shenzhen, Guangdong 518102 (CN); Gui Zhou Zhenhua Newmaterial Co., Ltd, GuiYang, Guizhou 550000 (CN)
(72) Inventor: Xiang, Qianxin, Shenzhen Guangdong 518102 (CN); ZHAO, Xiaolian, Shenzhen Guangdong 518102 (CN)
(74) Representative: ProI European Patent Attorneys
(86) International application number: PCT/CN2010/078116
(87) International publication number: WO 2011/054262

(56) References cited:
- WO-A1-2006/091019
- CN-A- 1 971 980
- CN-A- 101 355 159
- CN-A- 101 707 252
- JP-A- 2002 110 253
- JP-A- 2006 164 758
- JP-A- 2006 260 906
- US-A1- 2009 230 349
- US-A1- 2009 233 176

## Description

### Background of the Present Invention

### Field of Invention

The present invention relates to a polycrystalline Co-Ni-Mn ternary positive-electrode material that may be used in a lithium ion secondary battery and preparing methods thereof.

### Description of Related Arts

Since the lithium ion battery has been commercialized in 1991, an advance in application of the lithium ion battery is always required and an energy density is continually increased upon the requirement of the market. More specifically, the energy density includes a volume energy density and a weight energy density which are both required to be increased according to a requirement of the market. Increasing of the volume energy density requires to increase a filling volume of the battery active material per volume unit under a premise of a same capacity full play. But currently, the most widely used material is still lithium cobaltate and has developed relatively mature since its commercialization, and is widely used in small-scale low power portable electronic products such as cell phone, notebook computer and other digital products, But in view of the limitation of resource and high requirement of security, to seek positive-electrode material for lithium ion battery of non-cobalt or low cobalt with low cost, high energy density and good security performance has been a main focus. Co-Ni-Mn ternary positive-electrode material and other Mn-base positive-electrode material, which have a good security performance and low cost, have developed to provide a higher capacity full play than lithium cobaltate. But according to an evaluation, the ternary positive-electrode material has a relatively low discharging potential and a low compact density of the pole piece, so that the volume energy density is still smaller than lithium cobaltate. Therefore, these disadvantages make Co-Ni-Mn ternary positive-electrode material and other Mn-base positive-electrode material hard to meet the high requirement of the market. And thus Co-Ni-Mn ternary positive-electrode material and other Mn-base positive-electrode material cannot take place of lithium cobaltate in the application of the high-end secondary lithium ion battery. Furthermore, a conventional preparing method which is just mechanical mixing two kinds of material to bring down the cost and enhance the security performance. For example, Sony Corporation mixes LiCoO₂ and LiMn₂O₄ together to improve over-charge performance and thermal durability, but the simple physical mixing may have influence to the performance of the material. For example, the compact density may decrease and the capacity is just an arithmetic average of the capacity of the certain kinds of mixing material.

Conventional battery technologies are known from US 2009/233176 A1, WO 2006/091019A1, and JP 2006260906 A.

### Summary of the Present Invention

The main object of the present invention is to provide a method of preparing a polycrystalline Co-Ni-Mn ternary positive-electrode material thereof, and lithium ion wherein the volume energy density and the discharging potential is increased. The security of the related lithium ion secondary battery is enhanced and the cost is decreased.

Additional advantages and features of the invention will become apparent from the description which follows, and may be realized by means of the instrumentalities and combinations particular point out in the appended claims.

The present invention provides a method of preparing a polycrystalline Co-Ni-Mn ternary positive-electrode material comprising the following steps: 1) preparing a precursor: add 6-25g polyethylene glycol into 300-500ml LiAc, LiOH or LiNO3 solution containing 1.0-1.2 mol/L Li, add thereto with at least one of salt compound of Co, Ni or Mn drop by drop and stir at 20-60°C with a stirring speed of 20-120rpm for 120min, wherein a total content of Co, Ni and Mn is 0.3-1.0mol, dry at 150-250°C for 2-10 hours in an oven type furnace, grind at a rotating speed of 200-1000rpm for 30min to obtain an oxide precursor which is selected from the group consisting of Li_{z}CoO₂, Li_{z}NiO₂, Li_{z}MnO₂, Li_{z}Co_{1- (x+y)} NiₓMn_{y}O₂, Li_{z}NiₓMn₁₋xO₂, Li_{z}CoₓNi₁₋ₓO₂ and Li₂MnO₃, wherein x, y, x+y <1, z≥1; 2) preparing the polycrystalline Co-Ni-Mn ternary positive-electrode material by sintering the precursor: mix at least two oxide precursors selected from the group consisting of Li_{z}CoO₂, Li_{z}NiO₂, Li_{z}MnO₂, Li_{z}Co₁₋ (x+y) NiₓMn_{y}O₂, Li_{z}NiₓMn₁₋ₓO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3, uniformly mix by grinding at a rotating speed of 200-1000rpm for 60min, sintering at 750-950°C for 5-15 hours in an oven type furnace, naturally cool down to a room temperature and jet mill under an air pressure of 0.4-1.0Mpa to obtain the polycrystalline Co-Ni-Mn ternary positive-electrode material; alternatively, preparing the polycrystalline Co-Ni-Mn ternary positive-electrode material by sintering an intermediate: sinter Li_{z}CoO₂, Li_{z}NiO₂, Li_{z}MnO₂, Li_{z}Co_{1-(x+y)}NiₓMn_{y}O₂, Li_{z}NiₓMn₁₋xO₂, Li_{z}CoₓNi₁₋ₓO₂ and Li₂MnO₃ respectively at 600-850°C for 5-15 hours in an oven type furnace, grind and uniformly mixing at least two sintered precursors which are selected from the group consisting of Li_{z}CoO₂, Li_{z}NiO₂, Li_{z}MnO₂, Li_{z}Co₁-_{(x+y)} NiₓMn_{y}O₂, Li_{z}NiₓMn₁₋xO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3 at a rotating speed of 500rpm for 60min, sinter at 750-980°C for 4-10 hours in an oven type furnace, naturally cool down to a room temperature and jet mill under an air pressure of 0.4-1.0Mpa to obtain the polycrystalline Co-Ni-Mn ternary positive-electrode material ; alternatively, preparing the polycrystalline Co-Ni-Mn ternary positive-electrode material by sintering a final product: sinter Li_{z}CoO₂, Li_{z}NiO₂, Li_{z}MnO₂, Li_{z}Co_{1-(x+y)}NiₓMn_{y}O₂, Li_{z}NiₓMn₁₋ₓO₂, Li_{z}CoₓNi₁₋ₓO₂ and Li₂MnO₃ respectively at 850-980°C for 5-10 hours in an oven type furnace, jet mill under an air pressure of 0.5Mpa, grade with a sample sieve to obtain particle with a particle size D50 is 8~20µm, mix at least two of selected from the group consisting of Li_{z}CoO₂, Li_{z}NiO₂, Li_{z}MnO₂, Li_{z}Co_{1- (x+y)} NiₓMn_{y}O₂, Li_{z}NiₓMn₁₋ₓO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3, sinter at 350-850°C for 0.5-5 hours in an oven type furnace, jet mill under an air pressure of 0.4-1.0Mpa to obtain the polycrystalline Co-Ni-Mn ternary positive-electrode material.

The salt compound of Co, Ni and Mn is selected from the group consisting of hydroxyl compound, oxalate and carbonate of Co, Ni and Mn.

A grading process using a sample sieve is provided to control the particle size D50 to 8~20µm after jet milling.

In accordance with another aspect of the invention, the present invention provides a method of preparing a polycrystalline Co-Ni-Mn ternary positive-electrode material comprising the following steps: 1) preparing a precursor: preparing 16 wt % nitrate aqueous solution containing 0.5-1.0 mol nitrate of at least one of Co, Ni and Mn, adding thereto with 10-25 wt % lithium nitrate containing 1.0-1.2 mol Li, after a reaction for 60-120min, drying and dewatering at 150-250°C for 2-10 hours in an oven type furnace, grinding at a rotating speed of 200-1000rpm for 30min to obtain an oxide precursor which is selected from the group consisting of Li_{z}CoO₂, Li_{z}NiO₂, Li_{z}MnO₂, Li_{z}Co_{1- (x+y)} NiₓMn_{y}O₂, Li_{z}NiₓMn₁₋xO₂, Li_{z}CoₓNi₁₋ₓO₂ and Li₂MnO₃, wherein x, y, x+y <1, z≥1; 2) preparing the polycrystalline Co-Ni-Mn ternary positive-electrode material by sintering the precursor: mixing at least two oxide precursors selected from the group consisting of Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3, uniformly mixing by grinding at a rotating speed of 200-1000rpm for 60min, sintering at 750-950°C for 5-15 hours in an oven type furnace, naturally cooling down to a room temperature and jet milling under an air pressure of 0.4-1.0Mpa to obtain the polycrystalline Co-Ni-Mn ternary positive-electrode material ; alternatively, preparing the polycrystalline Co-Ni-Mn ternary positive-electrode material by sintering an intermediate: sintering Li_{z}CoO₂, Li_{z}NiO₂, Li_{z}MnO₂, Li_{z}Co_{1-(x+y)}NiₓMn_{y}O₂, Li_{z}NiₓMn₁₋xO₂, Li_{z}CoₓNi₁₋ₓO₂ and Li₂MnO₃ respectively at 600-850°C for 5-15 hours in an oven type furnace, grinding and uniformly mixing at least two sintered precursors which are selected from the group consisting of Li_{z}CoO₂, Li_{z}NiO₂, Li_{z}MnO₂, Li_{z}Co_{1-(x+ y)} NiₓMn_{y}O₂, Li_{z}NiₓMn₁₋xO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3 at a rotating speed of 500rpm for 60min, sintering at 750-980°C for 4-10 hours in an oven type furnace, naturally cooling down to a room temperature and jet milling under an air pressure of 0.4-1.0Mpa, to obtain the polycrystalline Co-Ni-Mn ternary anode material ; alternatively, preparing the polycrystalline Co-Ni-Mn ternary anode material by sintering a final product: sintering Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ and Li₂MnO₃ respectively at 850-980°C for 5-10 hours in an oven type furnace, jet milling under an air pressure of 0.5Mpa, grading using a sample sieve to obtain particle with a particle size D50 is 8~ 20µm, mixing at least two of selected from the group consisting of Li_{z}CoO₂, Li_{z}NiO₂, Li_{z}MnO₂, Li_{z}Co_{1-(x+y)} NiₓMn_{y}O₂, Li_{z}NiₓMn₁₋ₓO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3, sintering at 350-850°C for 0.5-5 hours in an oven type furnace, jet milling under an air pressure of 0.4-1.Mpa to obtain the polycrystalline Co-Ni-Mn ternary positive-electrode material.

In this method of the present invention, a grading process using a sample sieve is provided to control the particle size D50 to 8~20µm after jet milling.

Still further objects and advantages will become apparent from a consideration of the ensuing description and drawings.

These and other objectives, features, and advantages of the present invention will become apparent from the following detailed description, the accompanying drawings, and the appended claims.

### Brief Description of the Drawings

Fig. 1 is an x ray diffraction pattern of a sample of Example 7.
Fig. 2 is an x ray diffraction pattern of a sample of Example 8.
Fig. 3 is an x ray diffraction pattern of a sample of Example 9.
Fig. 4 is an x ray diffraction pattern of a sample of Example 10.
Fig. 5 is an x ray diffraction pattern of a sample of Example 11.
Fig. 6 is an x ray diffraction pattern of a sample of Example 12.
Fig. 7 is an x ray diffraction pattern of a sample of Example 13.
Fig. 8 is an x ray diffraction pattern of a sample of Example 14.
Fig. 9 is an x ray diffraction pattern of a sample of Example 15.

### Detailed Description of the Preferred Embodiment

A polycrystalline Co-Ni-Mn ternary positive-electrode material prepared by the methods of the present invention is consisted of at least two crystalline bases selected from the group consisting of Li_{z}CoO₂, Li_{z}NiO₂, Li_{z}MnO₂, Li_{z}Co_{1-(x+y)} NiₓMn_{y}O₂, Li_{z}NiₓMn₁-xO₂, Li_{z}CoₓNi₁₋ₓO₂ and Li₂MnO₃, wherein x, y, x+y<1, z≥1, wherein the polycrystalline Co-Ni-Mn ternary positive-electrode material is formed in a polycrystalline layered structure, wherein a particle size thereof is 8~20µm, a compact density thereof is 3.9-4.3g/cm3, a capacity is at least 145mAh/g at a discharging rate of 0.5-1C, and a circulation capacity retention after 300 cycles is above 90%, processability is good and a pole piece is not easy to slip off.

The present invention provides a method of preparing a polycrystalline Co-Ni-Mn ternary positive-electrode material, the method comprises the following steps.

### 1) Prepare a precursor.

Add 6-25g polyethylene glycol into 300-500ml LiAc, LiOH or LiNO3 solution containing 1.0-1.2 mol/L Li, add thereto with at least one of salt compound of Co, Ni or Mn drop by drop and stir at 20-60°C with a stirring speed of 20-120rpm for 120min, wherein a total content of Co, Ni and Mn is 0.3-1.mol, dry at 150-250°C for 2-10 hours in an oven type furnace, grind at a rotating speed of 200-1000rpm for 30min to obtain an oxide precursor which is selected from the group consisting of Li_{z}CoO₂, Li_{z}NiO₂, Li_{z}MnO₂, Li_{z}Co_{1-(x+y)} NiₓMn_{y}O₂, Li_{z}NiₓMn₁ - xO₂, Li_{z}CoₓNi_{1 - x}O₂ and Li₂MnO₃, wherein x, y, x+y<1, z≥1. The salt compound of Co, Ni and Mn is selected from the group consisting of hydroxyl compound, oxalate and carbonate of Co, Ni and Mn.

Alternatively, prepare 16 wt % nitrate aqueous solution containing 0.5-1.0 mol nitrate of at least one of Co, Ni and Mn, add thereto with 10-25 wt % lithium nitrate containing 1.0-1.2 mol Li, after a reaction for 60-120min, dry and dewater at 150-250°C for 2-10 hours in an oven type furnace, grind at a rotating speed of 200-1000rpm for 30min to obtain an oxide precursor which is selected from the group consisting of Li_{z}CoO₂, Li_{z}NiO₂, Li_{z}MnO₂, Li_{z}Co₁- _{(x+y)} NiₓMn_{y}O₂, Li_{z}NiₓMn₁₋xO₂, Li_{z}CoₓNi₁₋ₓO₂ and Li₂MnO₃, wherein x, y, x+y<1, z≥1.

### 2) Prepare the polycrystalline Co-Ni-Mn ternary positive-electrode material.

Prepare the polycrystalline Co-Ni-Mn ternary positive-electrode material by sintering the precursor: mix at least two oxide precursors selected from the group consisting of Li_{z}CoO₂, Li_{z}NiO₂, Li_{z}MnO₂, Li_{z}Co₁-_{(x+y)} NiₓMn_{y}O₂, Li_{z}NiₓMn₁₋ₓO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3, uniformly mix by grinding at a rotating speed of 200-1000rpm for 60min, sinter at 750-950°C for 5-15 hours in an oven type furnace, naturally cool down to a room temperature and jet milling under an air pressure of 0.4-1.0Mpa, use a sample sieve for grading to control the particle size D50 to 8~20µm to obtain the polycrystalline Co-Ni-Mn ternary positive-electrode material.

Alternatively, prepare the polycrystalline Co-Ni-Mn ternary positive-electrode material by sintering an intermediate: sinter Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ and Li₂MnO₃ respectively at 600-850°C for 5-15 hours in an oven type furnace, grind and uniformly mix at least two sintered precursors which are selected from the group consisting of Li_{z}CoO₂, Li_{z}NiO₂, Li_{z}MnO₂, Li_{z}Co_{1- (x+y)} NiₓMn_{y}O₂, Li_{z}NiₓMn₁₋ₓO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3 at a rotating speed of 500rpm for 60min, sinter at 750-980°C for 4-10 hours in an oven type furnace, naturally cool down to a room temperature and jet milling under an air pressure of 0.4-1.0Mpa, use a sample sieve for grading to control the particle size D50 to 8~20µm to obtain the polycrystalline Co-Ni-Mn ternary positive-electrode material.

Alternatively, prepare the polycrystalline Co-Ni-Mn ternary positive-electrode material by sintering a final product: sinter Li_{z}CoO₂, Li_{z}NiO₂, Li_{z}MnO₂, Li_{z}Co_{1-(x+y)} NiₓMnyO₂, Li_{z}NiₓMn₁₋xO₂, Li_{z}CoₓNi₁₋ₓO₂ and Li₂MnO₃ respectively at 850-980°C for 5-10 hours in an oven type furnace, jet mill under an air pressure of 0.5Mpa, grade using a sample sieve to obtain particle with a particle size D50 is 8~20µm, mix at least two of selected from the group consisting of Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3, sinter at 350-850°C for 0.5-5 hours in an oven type furnace, jet mill under an air pressure of 0.4-1.0Mpa, use a sample sieve for grading to control the particle size D50 to 8~20µm to obtain the polycrystalline Co-Ni-Mn ternary positive-electrode material.

The drying and dewatering device of the present invention is a KSF1100-V oven-type furnace of Yixing Qianjing Furnace Device Co.,Ltd. The stirring device is a JJ experimental homogenizer of Langfang Shengtong Machinery Co., Ltd. The grinding device is a SHQM two-planet type grinder of Lianyuangang Chunlong Petroleum Instrument Co., Ltd. The grading equipment is a TY-200A analyzing standard grading sieve of Xinxiang Tongyi Machinery Co., Ltd. The high manganese polycrystalline positive-electrode material of the present invention is tested and analyzed with a JSM6360 scanning electron microscope of Japan Electronic Co., Ltd, a D/max-2200pc x-ray diffractometer of Japan Rigaku Co., Ltd, a LS602 laser particle size analyzer of Zhuhai Omec Co., Ltd, a FZS4-4B densitometer and a Pioneer 2002 areameter of Beijing Iron&Steel Research Institute.

A lithium ion secondary battery may be consisted of positive electrode, negative electrode, non-aqueous electrolytic solution, separator, and a container. The positive electrode is consisted of a positive current collector and active positive-electrode material coated on the positive current collector, wherein the active positive-electrode material is consisted of at least two crystalline bases selected from the group consisting of Li_{z}CoO₂, Li_{z}NiO₂, Li_{z}MnO₂, Li_{z}Co_{1 - (x+y)} NiₓMn_{y}O₂, Li_{z}NiₓMn₁₋xO₂ Li_{z}CoₓNi₁₋ₓO₂ and Li₂MnO₃, wherein x, y, x+y<1, z≥1. The polycrystalline Co-Ni-Mn ternary positive-electrode material is formed in a polycrystalline layered structure, a mol ratio of Li: Co: Ni: Mn is 1-1.2:0.4-0.7: 0.2-0.5: 0.1-0.3, a particle size thereof is 8~20µm, a compact density thereof is above 3.9g/m³. The negative electrode is consisted of negative current collector and active negative-electrode material coated on the negative current collector, the separator is just a solid insulation layer or conductive solid matter, so that the positive electrode is separated from the negative electrode. The container is used for receiving the positive electrode, the negative electrode, the separator, and the electrolytic solution.

The positive-electrode material of the present invention may be employed to prepare lithium ion secondary battery. The positive-electrode material is prepared by the following steps: mix polycrystalline Co-Ni-Mn ternary positive-electrode material of the present invention, electric conductive carbon black which is 3% weight of the anode material, and binder PVDF which is 3% weight of the anode material to obtain a resulting mixture, add n-methyl pyrrolidone thereto with a ration of the resulting mixture to n-methyl pyrrolidone is 1:1 by weight, after uniformly stirring to obtain a broth, coat the broth onto the aluminum foil current collector, dry and compress to obtain the positive-electrode material pole piece. The negative-electrode material is prepared by the following steps: mix active negative-electrode material which is mesocarbon microbeads, conductive agent S-P which is 2% weight of the negative-electrode material, and binder PVDF which is 10% weight of the negative-electrode material to obtain a resulting mixture, add n-methyl pyrrolidone thereto with a ration of the resulting mixture to n-methyl pyrrolidone is 1:1 by weight, after uniformly stirring to obtain a broth, coat the broth onto the copper foil current collector, dry and compress to obtain the negative-electrode material pole piece. The separator is made of PP material, the container comprises an aluminum casing with an insulation layer and a battery lid with lead guiding holes. The compressed positive-electrode material pole piece and the negative-electrode material pole piece is welded with leads, and then the separator is inserted therebetween, after winding on a up-coiler, the resulting assembly is put into the aluminum casing, then the leads are guided out of the battery lid, and then the lead guiding holes are sealed by glue. The battery lid and the aluminum casing are sealedly welded together. The electrolytic solution is injected thereinto in an environment with a moisture lower than 1.5%, the electrolytic solution is a mixture of EC, DEC, and DMC with a mass ratio of 1:1:1, the electrolyte is 1M lithium hexafluorophosphate, and the container is immediately sealed after the injection process, a battery type is square 053084.

The active negative-electrode material also can be substance for lithium ion easy to be embedded into or escape therefrom, the substance can be non carbon-based material such as Li₄Ti₅O₁₂, amorphous tin oxides, WO₂, MoO₂, TiS₂ and carbon-based material which is selected from the group consisting of graphite, non-oriented graphite, coke, carbon fiber, spherical carbon, resin sintered carbon, vapor-grown carbon, and carbon nanotubes. The negative-electrode material containing certain kind of carbon fiber or spherical carbon can provide a high charging efficiency, preferably, mesophase pitch-based carbon fiber or mesophase pitch-basedcarbon spheres which can be obtained through public preparing method is used as the carbonization matter. Nonaqueous electrolyte is prepared by dissolving LiPF₆ in nonaqueous solution ethylene carbonate or dimethyl carbonate. The separator, which can be porous membrane made of polyethylene or polypropylene, solid electrolyte containing gel electrolyte prepared from plasticizing polymer with nonaqueous electrolytic solution, or woven made of synthesized resin, does not dissolve in the above nonaqueous solution.

The charging and discharging test of the lithium ion secondary battery is carried out according to the testing method of GB/T18287-2000, the testing device is a BS-9360 battery testing cabinet of Guangzhou Qingtian Co., Ltd. A capacity full play per volume unit is used to evaluate the performance of the battery. For anode materials with a same capacity full play, the higher of the compact density of the pole piece, the more active material on the pole piece per volume unit, and the capacity full play can also be higher per volume unit. Accordingly, a calculation formula is : compact density of the pole piece(g/cm³)×initial capacity (mAh/g).

### 1) Preparing of the precursor.

### Example 1

6g polyethylene glycol was added into 300ml LiAc solution containing 1.00mol/L Li, 40g cobalt carbonate containing 0.3 mol Co was added thereto, stirred at 20°C with a stirring speed of 120rpm for 120min, dried at 150°C for 2 hours in an oven type furnace, grinded at a rotating speed of 1000rpm for 30min to obtain an oxide precursor consisting of Li_{z}CoO₂.

### Example 2

25g polyethylene glycol was added into 500ml LiNO₃ solution containing 1.20mol/L Li, 21g cobalt carbonate containing 0.16 mol Co, 21g nickel carbonate containing 0.16 mol Ni, and 22g manganese carbonate containing 0.16 mol Ni were added thereto, stirred at 60°C with a stirring speed of 20rpm for 120min, dried at 250°C for 10hours in an oven type furnace, grinded at a rotating speed of 200rpm for 30min to obtain an oxide precursor consisting of LiCo_{1/3}Ni_{1/3}Mn_{1/3}O₂.

### Example 3

20g polyethylene glycol was added into 500ml LiOH solution containing 1.10mol/L Li, 13g cobalt carbonate containing 0.1 mol Co, 25g nickel carbonate containing 0.2 mol Ni, and 26g manganese carbonate containing 0.2 mol Ni were added thereto, stirred at 40°C with a stirring speed of 50rpm for 120min, dried at 200°C for 6 hours in an oven type furnace, grinded at a rotating speed of 600rpm for 30min to obtain an oxide precursor consisting of LiCo_{1/5}Ni_{2/5}Mn_{2/5}O₂.

### Example 4

Co (NO₃) ₂·6H₂O containing 0.2 mol Co, Ni (NO₃) ₂·6H₂O containing 0.5 mol Ni, and , Mn (NO₃) ₂(50%) containing 0.3 mol Mn were dissolved in 1000g water to prepare a 16wt % aqueous mixture, added thereto with 15 wt % lithium nitrate containing 1.2 mol Li drop by drop while a temperature was maintained at 30°C and a stirring speed was 20 rpm, after a reaction for 60min, dried and dewatered at 150°C for 10 hours in an oven type furnace, grinded at a rotating speed of 1000rpm for 30min to obtain an oxide precursor consisting of LiC_{02/10}Ni_{5/10}Mn_{3/10}O₂.

### Example 5

Co (NO₃) ₂·6H₂O containing 0.1 mol Co, Ni (NO₃) ₂·6H₂O containing 0.2 mol Ni, and , Mn (NO₃) ₂(50%) containing 0.2 mol Mn were dissolved in 580g water to prepare a 16wt % aqueous mixture, added thereto with 15 wt % lithium nitrate containing 1.0 mol Li drop by drop while a temperature was maintained at 30°C and a stirring speed was 20 rpm, after a reaction for 60min, dried and dewatered at 200°C for 6 hours in an oven type furnace, grinded at a rotating speed of 1000rpm for 30min to obtain an oxide precursor consisting of LiCo_{1/5}Ni_{2/5}Mn_{2/5}O₂.

### Example 6

Co CNO₃) ₂·6H₂O containing 0.2 mol Co, Ni (NO₃) ₂·6H₂O containing 0.2 mol Ni, and , Mn (NO₃) ₂(50%) containing 0.2 mol Mn were dissolved in 610g water to prepare a 16wt % aqueous mixture, added thereto with 15 wt % lithium nitrate containing 1.1 mol Li drop by drop while a temperature was maintained at 30°C and a stirring speed was 20 rpm, after a reaction for 60min, dried and dewatered at 250°C for 3 hours in an oven type furnace, grinded at a rotating speed of 1000rpm for 30min to obtain an oxide precursor consisting of LiCo_{1/3}Ni_{1/3}Mn_{1/3}O₂.

### 2) Preparing of the polycrystalline positive-electrode material.

The processing parameters of examples 7-9 preparing the polycrystalline Co-Ni-Mn ternary positive-electrode material by sintering a precursor were shown in Table 1, the testing result was shown in Table 4.

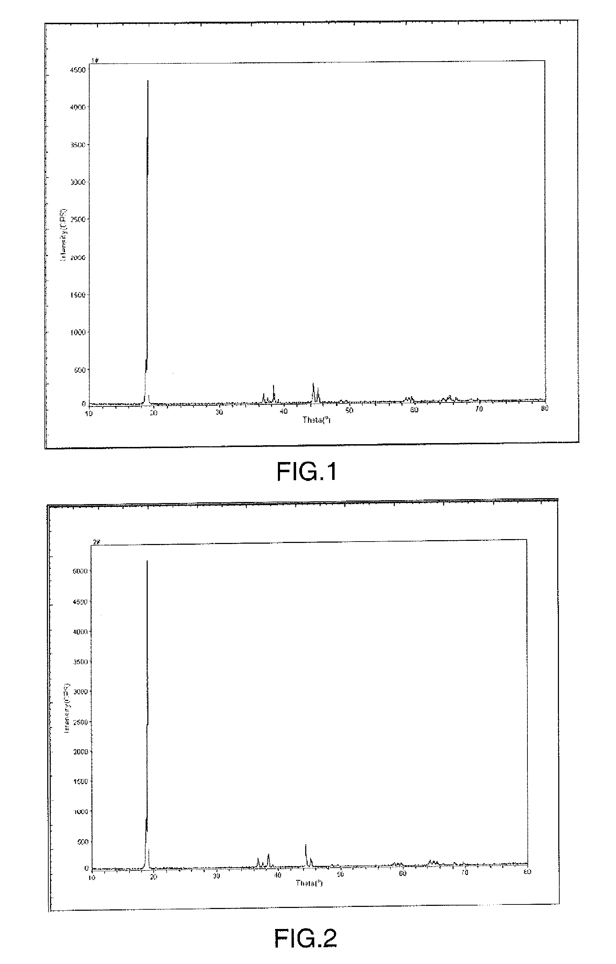

A crystalline composition of example 7 was LiCoO₂, LiCo_{1/3}Ni_{1/3}Mn_{1/3}O₂, as shown in Fig. 1.

A crystalline composition of example 8 was: LiCoO₂, LiC_{02/10}Ni_{5/10}Mn_{3/10}O₂, as shown in Fig. 2.

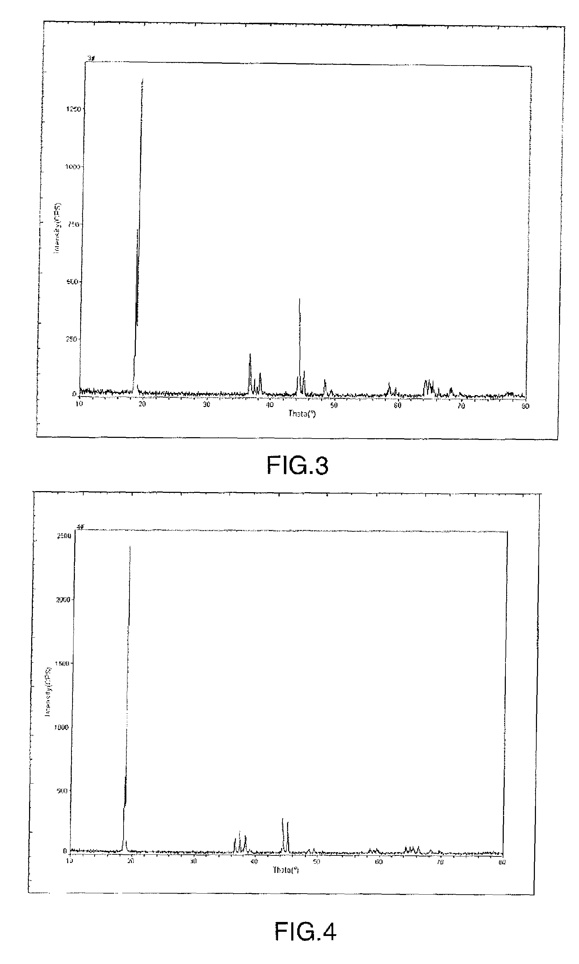

A crystalline composition of example 9 was: LiCoO₂, LiCo_{2/10}Ni_{5/10}Mn_{3/10}O₂, LiCo_{1/3}Ni_{1/3}Mn_{1/3}O₂. as shown in Fig. 3.

The processing parameters of examples 10-12 preparing the polycrystalline Co-Ni-Mn ternary positive-electrode material by sintering an intermediate were shown in Table 2, the testing result was shown in Table 4.

A crystalline composition of example 10 was LiCoO₂, LiCo_{1/3}Ni_{1/3}Mn_{1/3}O₂, as shown in Fig. 4.

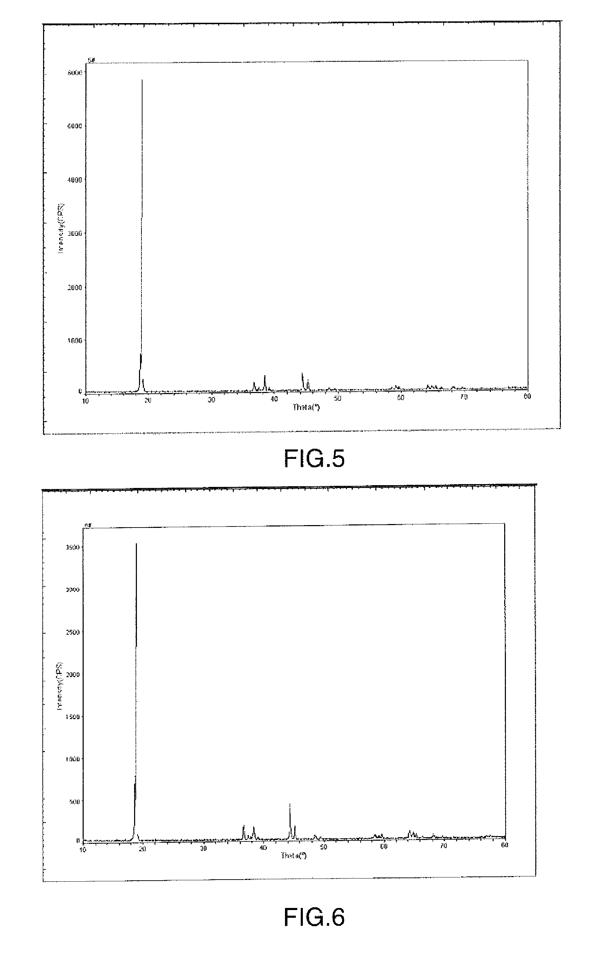

A crystalline composition of example 11 was: LiCoO₂, LiCo_{2/10}Ni_{5/10}Mn_{3/10}O₂, as shown in Fig. 5.

A crystalline composition of example 12 was : LiCoO₂, LiCo_{2/10}Ni_{5/10}Mn_{3/10}O₂, LiCo_{1/3}Ni_{1/3}Mn_{1/3}O₂, as shown in Fig. 6.

The processing parameters of examples 13-15 preparing the polycrystalline Co-Ni-Mn ternary positive-electrode material by sintering a final product were shown in Table 2, the testing result was shown in Table 4.

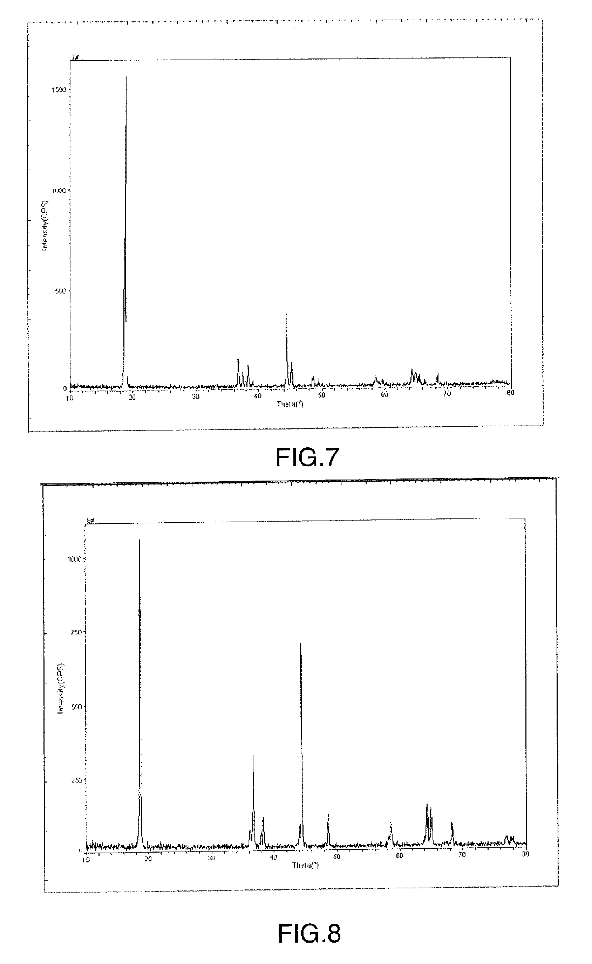

A crystalline composition of example 13 was LiCoO₂, LiCo_{1/5}Ni_{2/5}Mn_{2/5}O₂, LiCo_{1/3}Ni_{1/3}Mn_{1/3}O₂, as shown in Fig. 7.

A crystalline composition of example 14 was: LiCo_{2/10}Ni_{5/10}Mn_{3/10}O₂, LiMn₂O₄, as shown in Fig. 8.

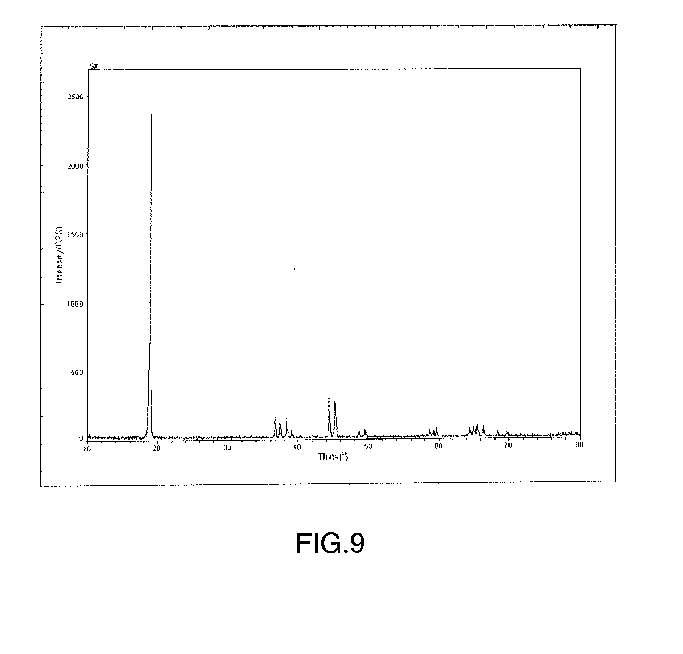

A crystalline composition of example 15 was: LiCoO₂, LiCo_{2/10}Ni_{5/10}Mn_{3/10}O₂, LiCo_{1/3}Ni_{1/3}Mn_{1/3}O₂, as shown in Fig. 9.

### Control Example 1

The control example 1 was a public sold 053048 square lithium ion battery using Co-Ni-Mn ternary ZH5000R positive-electrode material of Shenzhen Zhenhua Chene-Chem Co., Ltd as the active material, wherein a mol ratio of Co: Ni: Mn was 0.2:0.5:0.3. The testing result was shown in Table 5. A capacity full play per volume unit of the pole piece was 560.4 mAh/cm³, a capacity retention after 100 cycles at 0.5C-1C was 94%, a capacity retention after 100 cycles was 85%.

### Control Example 2

The control example 2 was a public sold 053048 square lithium ion battery using lithium coblatate ZHT08 positive-electrode material of Shenzhen Zhenhua Chene-Chem Co., Ltd as the active material. The testing result was shown in Table 5. A capacity full play per volume unit of the pole piece was 560.4 mAh/cm³, a capacity retention after 100 cycles at 0.5C-1C was 90%, a capacity retention after 100 cycles was 84%.

### Control Example 3

The control example 3 was a public sold 053048 square lithium ion battery using Co-Ni-Mn ternary ZH3000 positive-electrode material of Shenzhen Zhenhua Chene-Chem Co., Ltd as the active material, wherein a mol ratio of Co: Ni: Mn was 1/3: 1/3: 1/3. The testing result was shown in Table 5. A capacity full play per volume unit of the pole piece was 480.7 mAh/cm³, a capacity retention after 100 cycles at 0.5C-1C was 95%, a capacity retention after 100 cycles was 89%.

The testing results showed that the performance of the capacity full play per volume unit of the polycrystalline anode material of the present invention was better than lithium cobaltate and Co-Ni-Mn ternary monocrystalline material. Assuming the compact density should be above 3.9g/cm³, selecting a material containing more Ni in the crystalline structure did help to increase the energy density.

One skilled in the art will understand that the embodiment of the present invention as shown in the drawings and described above is exemplary only and not intended to be limiting.

**Table 1 Processing parameters of examples 7-9 preparing the polycrystalline Co-Ni-Mn ternary positive-electrode material by sintering the precursor**

| Preparing method | Example | Precursor | Mole weight (mol) | Grinding speed | Sintering temperature | Sintering time | Air pressure | Particle size (D50) |
|---|---|---|---|---|---|---|---|---|
| sintering the precursor | Example 7 | LiCoO₂ | 5 | 300rpm | 900 °C | 10hours | 0.4Mpa | 13.3µm |
| | | LiCo_{1/3}Ni_{1/3}Mn_{1/3}O₂ | 2 | | | | | |
| | Example 8 | LiCoO₂ | 5 | 1000rpm | 930°C | 6 hours | 0.7Mpa | 10.5µm |
| | | LiCo_{2/10}Ni_{5/10}Mn_{3/10}O₂ | 5 | | | | | |
| | Example 9 | LiCo_{2/10}Ni_{5/10}Mn_{3/10}O₂ | 5 | 600rpm | 920°C | 8 hours | 0.9Mpa | 10.2µm |
| | | LiCo_{1/3}Ni_{1/3}Mn_{1/3}O₂ | 1 | | | | | |
| | | LiCoO₂ | 3 | | | | | |

**Table 2 Processing parameters of examples 10-12 preparing the polycrystalline Co-Ni-Mn ternary positive-electrode material by sintering an intermediate**

| Preparing method | Example | Precursor | Mole weight (mol) | Intermediate sintering temperature | Intermed iate sintering time | Combination Sintering temperature | Sintering time | Air pressure | Particle size (D50) |
|---|---|---|---|---|---|---|---|---|---|
| sintering an intermediate | Example 10 | LiCoO₂ | 5 | 600 °C | 15hours | 950°C | 8hours | 0.4Mpa | 14.5µm |
| | | LiCo_{1/3}Ni_{1/3}Mn_{1/3}O₂ | 3 | 850°C | 10hours | | | | |
| | Example 11 | LiCoO₂ | 5 | 850°C | 5hours | 850°C | 10hours | 0.7Mpa | 9.3µm |
| | | LiCo_{2/10}Ni_{5/10}Mn _{3/10}O₂ | 4 | 800°C | 10hours | | | | |
| | Example 12 | LiCo_{2/10}Ni_{5/10}Mn _{3/10}O₂ | 5 | 800°C | 10hours | 980°C | 4hours | 0.9Mpa | 10.9µm |
| | | LiCo_{1/5}Ni_{2/5}Mn_{2/5} O₂ | 2 | 750°C | 15hours | | | | |

**Table 3 Processing parameters of examples 13-15 preparing the polycrystalline Co-Ni-Mn ternary positive-electrode material by sintering a final product**

| Preparing method | Example | Precursor | Mole weight (mol) | Monocrystal sintering temperature | Sintering time | Combination Sintering temperature | Sintering time | Air pressure | Particle size (D50) |
|---|---|---|---|---|---|---|---|---|---|
| Sintering a final product | Example 13 | LiCoO₂ | 5 | 890°C | 10hours | 850°C | 2hours | 0.6Mpa | 13.9µm |
| | | LiCo1_{/5}Ni2/5Mn2_{/5} O₂ | 1 | 960°C | 10hours | | | | |
| | | LiCo_{2/10}Ni_{5/10}Mn_{3/10} O₂ | 4 | 920°C | 8hours | | | | |
| | | LiCo_{1/3}Ni_{1/3}Mn_{1/3}O₂ | 2 | 920°C | 8hours | | | | |
| | Example 14 | LiCo_{2/10}Ni_{5/10}Mn_{3/10} O₂ | 5 | 980°C | 10hours | 350°C | 5hours | 0.9Mpa | 10.7µm |
| | | LiMn₂O₄ | 1 | 850°C | 8hours | | | | |
| | | LiCoO₂ | 4 | 910°C | 7hours | | | | |
| | Example 15 | LiCoO₂ | 6 | 900°C | 10hours | 650°C | 4hours | 0.5Mpa | 11.2µm |
| | | LiCo_{2/10}Ni_{5/10}Mn_{3/10} O₂ | 4 | 920°C | 8hours | | | | |
| | | LiCo_{1/3}Ni_{1/3}Mn_{1/3}O₂ | 2 | 920°C | 8hours | | | | |

**Table 4 Testing Results of examples 7-15**

| Example | Composition | Property of pole piece | | Initial capacity | Capacity full play per volume | Capacity retention | | |
|---|---|---|---|---|---|---|---|---|
| | Co:Ni:Mn mol | Compact density g/cm³ | Storing performance moisture≤75 % | mAh/g 1C | mAh/cm³ | 50 cycles % | 150 cycles % | 300 cycles % |
| 7 | 80:10:10 | 4. 0 | Does not slip off after 48hr | 145.1 | 580.4 | 96 | 92 | 86 |
| 8 | 60:25:15 | 3.96 | Does not slip off after 4Fhr | 147.2 | 582.9 | 94 | 90 | 87 |
| 9 | 48:32:20 | 3.91 | Does not slip off after 48hr | 148.8 | 581.8 | 96 | 89 | 86 |
| 10 | 75:12.5:12.5 | 4.0 | Does not slip off after 48hr | 145.2 | 580.8 | 97 | 93 | 87 |
| 11 | 64:22:14 | 3.95 | Does not slip off after 48hr | 147.8 | 585.3 | 96 | 91 | 88 |
| 12 | 50:30:20 | 3.92 | Does not slip off after 48hr | 149.3 | 585.3 | 96 | 92 | 87 |
| 13 | 55.5:25.5:19.0 | 3.9 | Does not slip off after 48hr | 147.2 | 574.1 | 94 | 89 | 85 |
| 14 | 14:36:50 | 3.91 | Does not slip off after 48hr | 146. 3 | 572.0 | 98 | 92 | 88 |
| 15 | 62:22:16 | 3.97 | Does not slip off after 48hr | 149.5 | 593.5 | 97 | 89 | 86 |

It should be noted that, with respect to the ratio of Co:Ni:Mn mol, the Examples 7, 10, and 14 in Table 4 above do not form part of the invention but represent technical information useful for understanding the invention.

**Table 5 Testing results of control examples 1-3**

| Control Example | Composition | Property of pole piece | | Initial capacity | Capacity full play per volume | Capacity retention | | |
|---|---|---|---|---|---|---|---|---|
| | Co:Ni:Mn mol | Compact density g/cm³ | Storing performance moisture≤75% | mAh/g 1C | mAh/cm³ | 50 cycles % | 150 cycles % | 300 cycles % |
| 1 | 20:50:30 | 3.62 | Does not slip off after 48hr | 154.8 | 560.4 | 96 | 94 | 85 |
| 2 | 100:00:00 | 4.05 | Does not slip off after 4Fhr | 142.7 | 577.9 | 96 | 90 | 84 |
| 3 | 33.3:33.3:33.3 | 3.35 | Does not slip off after 48hr | 143.5 | 480.7 | 97 | 95 | 89 |

## Claims

1. A method of preparing a polycrystalline Co-Ni-Mn ternary positive-electrode material, comprising the steps of:
1) preparing a precursor:
adding 6-25g polyethylene glycol into 300-500ml LiAc, LiOH or LiNO3 solution containing 1.0-1.2 mol/L Li, adding thereto with at least one of salt compound of Co, Ni or Mn drop by drop and stirring at 20-60°C with a stirring speed of 20-120rpm for 120min, wherein a total content of Co, Ni and Mn is 0.3-1.0moL drying at 150 250 °C for 2-10 hours in an oven type furnace, grinding at a rotating speed of 200-1000rpm for 30min to obtain an oxide precursor which is selected from the group consisting of Li₂CoO₂, Li_{z}NiO₂, Li_{z}MnO₂, Li_{z}Co_{1- (x + y)} NiₓMn_{y}O₂, Li_{z}NiₓMn₁₋xO₂, Li_{z}CoₓNi₁₋ₓO₂ and Li₂MnO₃, wherein x, y, x+y< 1, z≥1; and
2) preparing said polycrystalline Co-Ni-Mn ternary positive-electrode material:
preparing said polycrystalline Co-Ni-Mn ternary positive-electrode material by sintering said precursor: mixing at least two oxide precursors selected from the group consisting of Li_{z}CoO₂, Li_{z}NiO₂, Li_{z}MnO₂, Li_{z}Co_{1- (x + y}) NiₓMn_{y}O₂, Li_{z}NiₓMn₁₋xO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3, uniformly mixing by grinding at a rotating speed of 200-1000rpm for 60min, sintering at 750-950°C for 5-15 hours in an oven type furnace, naturally cooling down to a room temperature and jet milling under an air pressure of 0.4-1.0Mpa to obtain said polycrystalline Co-Ni-Mn ternary positive-electrode material; or
preparing said polycrystalline Co-Ni-Mn ternary positive-electrode material by sintering an intermediate: sintering Li_{z}CoO₂, Li_{z}NiO₂, Li_{z}MnO₂, Li_{z}Co_{1- (x + y)} NiₓMn_{y}O₂, Li_{z}NiₓMn₁₋xO₂, Li_{z}CoₓNi₁₋ₓO₂ and Li₂MnO₃ respectively at 600-850°C for 5-15 hours in an oven type furnace, grinding and uniformly mixing at least two sintered precursors which are selected from the group consisting of Li_{z}CoO₂, Li_{z}NiO₂, Li_{z}MnO₂, Li_{z}Co_{1-(x+ y)} NiₓMn_{y}O₂, Li_{z}NiₓMn₁₋xO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3 at a rotating speed of 500rpm for 60min, sintering at 750-980°C for 4-10 hours in an oven type furnace, naturally cooling down to a room temperature and jet milling under an air pressure of 0.4-1.0Mpa, to obtain said polycrystalline Co-Ni-Mn ternary positive-electrode material; or
preparing said polycrystalline Co-Ni-Mn ternary positive-electrode material by sintering a final product: sintering Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ and Li₂MnO₃ respectively at 850-980°C for 5-10 hours in an oven type furnace, jet milling under an air pressure of 0.5Mpa, grading using a sample sieve to obtain particle with a particle size D50 is 8~20µm, mixing at least two of selected from the group consisting of Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3, sintering at 350-850°C for 0.5-5 hours in an oven type furnace, jet milling under an air pressure of 0.4-1.0Mpa to obtain said polycrystalline Co-Ni-Mn ternary positive-electrode material.

2. The method as recited in claim 1, wherein said salt compound of Co, Ni and Mn is selected from the group consisting of hydroxyl compound, oxalate and carbonate of Co, Ni and Mn.

3. The method as recited in claim 2, further comprising a grading process of using a sample sieve to control a particle size D50 to 8~20µm after jet milling.

4. A method of preparing a polycrystalline Co-Ni-Mn ternary positive-electrode material, comprising the steps of:
1) preparing a precursor:
preparing 16 wt % nitrate aqueous solution containing 0.5-1.0 mol nitrate of at least one of Co, Ni and Mn, adding thereto with 10-25 wt % lithium nitrate containing 1.0-1.2 mol Li, after a reaction for 60-120 minutes, drying and dewatering at 150-250°C for 2-10 hours in an oven type furnace, grinding at a rotating speed of 200-1000rpm for 30min to obtain an oxide precursor which is selected from the group consisting of Li_{z}CoO₂, Li_{z}NiO₂, Li_{z}MnO₂, Li_{z}Co_{1-(x+y)}NiₓMn_{y}O₂, Li_{z}NiₓMn₁₋xO₂, Li_{z}CoₓNi₁₋ₓO₂ and Li₂MnO₃, wherein x, y, x+y< 1, z≥1; and
2) preparing said polycrystalline Co-Ni-Mn ternary positive-electrode material:
preparing said polycrystalline Co-Ni-Mn ternary positive-electrode material by sintering said precursor: mixing at least two oxide precursors selected from the group consisting of Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3, uniformly mixing by grinding at a rotating speed of 200-1000rpm for 60 min, sintering at 750-950°C for 5-15 hours in an oven type furnace, naturally cooling down to a room temperature and jet milling under an air pressure of 0.4-1.0Mpa to obtain said polycrystalline Co-Ni-Mn ternary positive-electrode material; or
preparing said polycrystalline Co-Ni-Mn ternary positive-electrode material by sintering an intermediate: sintering Li_{z}CoO₂, Li_{z}NiO₂, Li_{z}MnO₂, Li_{z}Co_{1-(x+y)}NiₓMn_{y}O₂, Li_{z}NiₓMn₁₋xO₂, Li_{z}CoₓNi₁₋ₓO₂ and Li₂MnO₃ respectively at 600-850°C for 5-15 hours in an oven type furnace, grinding and uniformly mixing at least two sintered precursors which are selected from the group consisting of Li_{z}CoO₂, Li_{z}NiO₂, Li_{z}MnO₂, Li_{z}Co_{1-(x+ y)} NiₓMn_{y}O₂, Li_{z}NiₓMn₁₋xO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3 at a rotating speed of 500rpm for 60min, sintering at 750-980°C for 4-10 hours in an oven type furnace, naturally cooling down to a room temperature and jet milling under an air pressure of 0.4-1.0Mpa, to obtain said polycrystalline Co-Ni-Mn ternary positive-electrode material; or
preparing said polycrystalline Co-Ni-Mn ternary positive-electrode material by sintering a final product: sintering Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ and Li₂MnO₃ respectively at 850-980°C for 5-10 hours in an oven type furnace, jet milling under an air pressure of 0.5Mpa, grading with a sample sieve to obtain particle with a particle size D50 is 8~20µm, mixing at least two of selected from the group consisting of Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ and Li₂MnO₃ with a mol ratio of Li: Co: Ni: Mn is 1-1.2:0.4-0.7: 0.2-0.5: 0.1-0.3, sintering at 350-850°C for 0.5-5 hours in an oven type furnace, jet milling under an air pressure of 0.4-1.0Mpa, to obtain said polycrystalline Co-Ni-Mn ternary positive-electrode material.

5. The method as recited in claim 4, further comprising a grading process of using a sample sieve to control a particle size D50 to 8~20µm after jet milling.

## Patentansprüche

1. Eine Zubereitungsmethode für polykristallines Co-Ni-Mn ternäres positives Elektrodenmaterial, welche folgende Schritte umfasst:
1) Zubereitung des Vorläufers:
Hinzufügen von 6-25g Polyethylenglykol zu 300-500ml LiAc, LiOH oder LiNO₃ Lösung die 1.0-1.2 mol/L Li enthält, dazu zumindest eine der Salzverbindungen von Co, Ni oder Mn tropfenweise zugeben und bei 20-60°C umrühren mit einer Rührgeschwindigkeit von 20-120 Umdrehungen/Minute für 120 Minuten, hierbei ist der Gesamtanteil an Co, Ni und Mn 0.3-1.0 mol, trocknen bei 150-250°C für 2-10 Stunden in einem herdähnlichem Ofen, mahlen mit einer Drehgeschwindigkeit von 200-1000 Umdrehungen/Minute für 30 Minuten, um einen Oxid Vorläufer zu bekommen, der aus der Gruppe, die aus Li_{z}CoO₂, Li_{z}NiO₂, Li_{z}MnO₂, Li_{z}CO_{1-(x+y)} NiₓMn_{y}O₂, Li_{z}NiₓMn₁₋xO₂, Li_{z}CoₓNi₁₋ₓO₂ und Li₂MnO₃ besteht, ausgewählt wird, wobei x, y, x+y<1, z≥1; und
2) zubereiten des genannten polykristallinen Co-Ni-Mn ternären positiven Elektrodenmaterials:
Zubereiten des genannten polykristallinen Co-Ni-Mn ternären positiven Elektrodenmaterials durch sintern des genannten Vorläufers. Vermischen von mindestens zwei der Oxid Vorläufer aus der Gruppe, die aus Li_{z}CoO₂, Li_{z}NiO₂, Li_{z}MnO₂, Li_{z}CO_{1-(x+y)}NiₓMn_{y}O₂, Li_{z}NiₓMn₁₋xO₂, Li_{z}CoₓNi₁₋ₓO₂ und Li₂MnO₃ besteht, mit einem Mol Verhältnis von Li:Co:Ni:Mn von 1-1.2:0.4-0.7:0.2-0.5:0.1-0.3, gleichmäßig vermischen durch mahlen mit einer Drehgeschwindigkeit von 200-1000 Umdrehungen/Minute für 60 Minuten, sintern bei 750-950°C für 5-15 Stunden in einem herdähnlichen Ofen, auf Raumtemperatur natürlich abkühlen lassen und unter Druck luftstrahlvermahlen mit 0.4-1.0 Mpa, um das genannte polykristalline Co-Ni-Mn ternäre positive Elektrodenmaterial zu erhalten; oder
Zubereiten des genannten polykristallinen Co-Ni-Mn ternären positiven Elektrodenmaterials durch sintern eines Zwischenproduktes: sintern von Li_{z}CoO₂, Li_{z}NiO₂, Li_{z}MnO₂, Li_{z}CO_{1-(x+y)} NiₓMn_{y}O₂, Li_{z}NiₓMn₁₋xO₂, Li_{z}CoₓNi₁₋ₓO₂ und Li₂MnO₃ entsprechend bei 600-850°C für 5-15 Stunden in einem herdähnlichen Ofen, mahlen und gleichmäßig mischen von mindest zwei gesinterten Vorläufern, welche aus einer Gruppe Li_{z}CoO₂, Li_{z}NiO₂, Li_{z}MnO₂, Li_{z}CO_{1-(x+y)} NiₓMn_{y}O₂, Li_{z}NiₓMn₁₋xO₂, Li_{z}CoₓNi₁₋ₓO₂ und Li₂MnO₃ besteht, mit einem Mol Verhältnis von Li:Co:Ni:Mn von 1-1.2:0.4-0.7:0.2-0.5:0.1-0.3 bei einer Drehgeschwindigkeit von 500 Umdrehungen/Minute für 60 Minuten mahlen, sintern bei 750-980°C für 4-10 Stunden in einem herdähnlichen Ofen, danach natürlich abkühlen lassen auf Zimmertemperatur und luftstrahlmahlen mit einem Luftdruck von 0.4-1.0 Mpa, um das genannte polykristalline Co-Ni-Mn ternäre positive Elektrodenmaterial zu erhalten; oder
Zubereiten des genannten polykristallinen Co-Ni-Mn ternären positiven Elektrodenmaterials durch sintern eines Endproduktes: sintern von Li_{z}CoO₂, Li_{z}NiO₂, Li_{z}MnO₂, Li_{z}CO_{1-(x+y)} NiₓMn_{y}O₂, Li_{z}NiₓMn₁₋xO₂, Li_{z}CoₓNi₁₋ₓO₂ und Li₂MnO₃ entsprechend bei 850-980°C für 5-10 Stunden in einem herdähnlichen Ofen, luftstrahlmahlen mit einem Luftdruck von 0.5 Mpa, mit einem Mustersieb klassifizieren auf eine Partikelgrösse von D50 gleich 8-20 µm, mischen von mindest zwei von der Gruppe, welche aus Li_{z}CoO₂, Li_{z}NiO₂, Li_{z}MnO₂, Li_{z}CO_{1-(x+y)} NiₓMn_{y}O₂, Li_{z}NiₓMn₁₋xO₂, Li_{z}CoₓNi₁₋ₓO₂ und Li₂MnO₃ besteht, mit einem Mol Verhältnis von Li:Co:Ni:Mn von 1-1.2:0.4-0.7:0.2-0.5:0.1-0.3, sintern bei 350-850°C für 0.5-5 Stunden in einem herdähnlichen Ofen, luftstrahlmahlen unter einem Luftdruck von 0.4-1.0 Mpa, um das genannte polykristalline Co-Ni-Mn ternäre positive Elektrodenmaterial zu erhalten.

2. Die in Anspruch 1 aufgeführte Methode, bei der die genannte Salzverbindung von Co, Ni und Mn aus einer Gruppe die aus einer Hydroxyl Verbindung, Oxalat und Karbonat von Co, Ni und Mn besteht, ausgewählt wird.

3. Die in Anspruch 2 aufgeführte Methode enthält einen weiteren Klassifizierungsprozess unter Beihilfe eines Mustersiebs, um die Partikelgrösse auf D50 auf 8-20 µm nach dem luftstrahlmahlen zu kontrollieren.

4. Eine Methode zur Zubereitung eines polykristallinen Co-Ni-Mn ternären positiven Elektrodenmaterials, bestehend aus den Schritten:
1) zubereiten des Vorläufers:
zubereiten einer 16 Gewicht % Nitrat wässrigen Lösung, die 0.5-1.0 mol Nitrat enthält von mindest einer von Co, Ni und Mn, dazu hinzufügen von 10-25 Gewicht % Lithium Nitrat, das 1.0-1.2 mol Li enthält, nach einer Reaktion für 60-120 Minuten, trocknen und entwässern bei 150-250°C für 2-10 Stunden in einem herdähnlichen Ofen, mahlen mit einer Drehgeschwindigkeit von 200-1000 Umdrehungen/Minute für 30 Minuten, um einen Oxid Vorläufer zu bekommen, welcher aus einer aus Li_{z}CoO₂, Li_{z}NiO₂, Li_{z}MnO₂, Li_{z}CO_{1-(x+y)} NiₓMn_{y}O₂, Li_{z}NiₓMn₁₋xO₂, Li_{z}CoₓNi₁₋ₓO₂ und Li₂MnO₃ bestehenden Gruppe, ausgewählt wird, wobei x, y, x+y<1, z≥1; und
2) zubereiten des genannten polykristallinen Co-Ni-Mn ternären positiven Elektrodenmaterials:
zubereiten des genannten polykristallinen Co-Ni-Mn ternären positiven Elektrodenmaterials durch sintern des genannten Vorläufers: mischen von mindest zwei Oxid Vorläufern, ausgewählt aus der Gruppe von Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ und Li₂MnO₃, mit einem Mol Verhältnis von Li:Co:Ni:Mn gleich 1-1.2:0.4-0.7:0.2-0.5:0.1-0.3, gleichmäßig gemischt unter mahlen bei einer Drehgeschwindigkeit von 200-1000 Umdrehungen/Minute für 60 Minuten, sintern bei 750-950°C für 5-15 Stunden in einem herdähnlichen Ofen, natürlich abkülen auf Zimmertemperatur und luftstrahlmahlen unter einem Luftdruck von 0.4-1.0 Mpa, um genanntes polykristallines Co-Ni-Mn ternäres positives Elektrodenmaterial zu erhalten; oder
zubereiten genannten polykristallinen Co-Ni-Mn ternären positiven Elektrodenmaterials durch sintern eines Zwischenproduktes: sintern von Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ und Li₂MnO₃ entsprechend bei 600-850°C für 5-15 Stunden in einem herdähnlichen Ofen, mahlen und gleichmäßig mischen von mindest zwei gesinterten Vorläufern, welche aus der Gruppe von Li_{z}CoO₂, Li_{z}NiO₂, Li_{z}MnO₂, Li_{z}Co_{1- (x+y)} NiₓMn_{y}O₂, Li_{z}NiₓMn₁₋xO₂, Li_{z}CoₓNi₁₋ₓO₂ und Li₂MnO₃ ausgewählt werden, mit einem Mol Verhältnis von Li:Co:Ni:Mn gleich 1-1.2:0.4-0.7:0.2-0.5:0.1-0.3 bei einer Drehgeschwindigkeit von 500 Umdrehungen/Minute für 60 Minuten, sintern bei 750-980°C für 4-10 Stunden in einem herdähnlichen Ofen, natürlich abkühlen auf Zimmertemperatur und luftstrahlmahlen bei einem Luftdruck von 0.4-1.0 Mpa, um genanntes polykristallines Co-Ni-Mn ternäres positives Elektrodenmaterial zu erhalten; oder
zubereiten des genannten polykristallinen Co-Ni-Mn ternären positiven Elektrodenmaterials durch sintern eines Endproduktes: sintern von Li_{z}CoO₂, Li_{z}NiO₂, Li_{z}MnO₂, Li_{z}Co_{1- (x+y)} NiₓMn_{y}O₂, Li_{z}NiₓMn₁₋xO₂, Li_{z}CoₓNi₁₋ₓO₂ und Li₂MnO₃ entsprechend bei 850-980°C für 5-10 Stunden in einem herdähnlichen Ofen, luftstrahlmahlen bei einem Luftdruck von 0.5 Mpa, klassifizieren mit einem Mustersieb, um eine Partikelgrösse D50 gleich 8-20 µm zu bekommen, mischen von mindest zwei aus der Gruppe von Li_{z}CoO₂, Li_{z}NiO₂, Li_{z}MnO₂, Li_{z}CO_{1-(x+y)} NiₓMn_{y}O₂, Li_{z}NiₓMn₁₋xO₂, Li_{z}CoₓNi₁₋ₓO₂ und Li₂MnO₃, mit einem Mol Verhältnis von Li:Co:Ni:Mn gleich 1-1.2:0.4-0.7:0.2-0.5:0.1-0.3, sintern bei 350-850°C für 0.5-5 Stunden in einem herdähnlichen Ofen, luftstrahlmahlen bei einem Luftdruck von 0.4-1.0 Mpa, um genanntes polykristallines Co-Ni-Mn ternäres positives Elektrodenmaterial zu erhalten.

5. Die Methode, unter Anspruch 4 aufgeführt, enthält weiterhin einen Klassifizierungsprozess unter Beihilfe eines Mustersiebs, um die Partikelgrösse zu kontrollieren auf D50 von 8-20 µm, nach dem luftstrahlmahlen.

## Revendications

1. Une méthode de préparation d'un polycrystallin Co-Ni-Mn ternaire matériel électrode-positif, comprenant les étapes de:
1) préparation d'un précurseur :
Rajouter 6-25g de polyéthylèneglycol dans une 300-500 ml de solution LiAc, LiOH ou LiNO3 contenant 1.0-1.2 mol/L Li, lui ajoutant au moins une solution saline composée de Co, Ni ou Mn, goute à goute et remuer à une temperature de 20-60°C tout en remuant à une vitesse de 20-120rpm pendant 120 minutes, alors que le contenu total de Co, Ni et de Mn est de 0.3-1.0 mol, laisser sécher à 150-250°C pendant 2-10 heures dans un four de type fournaise, et triturer / moudre à une vitesse de rotation de 200-1000 rpm pendant 30 minutes dans le but d'obtenir un précurseur d'oxyde sélectionné dans le groupe comprenant Li₂CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ and Li₂MnO₃, alors que x, y, x+y<1, z≥1; et
2) préparation du susdit polycrystallin Co-Ni-Mn matériel électrode-positif :
Préparation du reparing susdit polycrystallin Co-Ni-Mn matériel électrode-positif par le frottage du susdit précurseur : en mélangeant au moins deux précurseurs d'oxyde sélectionnés parmi ceux qui consistent Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ et Li₂MnO₃ avec un ratio de mol de Li: Co: Ni: Mn is 1-1.2:0.4-0.7: 0.2-0.5: 0.1-0.3, mélanger uniformément par trituration à une vitesse de rotation de 200-1000 rpm pendant 60 minutes, frittant à 750-950 °C pendant 5-15 heures dans un four de type fournaise, laisser refroidir de façon naturelle jusqu'à la temperature ambiante et and microniser à une pression d'air de 0.4-1.0 Mpa pour obtenir le susdit polycrystallin Co-Ni-Mn ternaire matériel électrode-positif ; ou
preparation du susdit polycrystallin Co-Ni-Mn ternaire matériel électrode-positif en frittant un intermédiaire : frittant Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ et Li₂MnO₃ respectivement à 600-850°C pendant 5-15 heures dans un four de type fournaise, en moulant / triturant et mélangeant de manière uniforme au moins deux des précurseurs frittés à sélectionner dans le groupe consistant en Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ et Li₂MnO₃ avec un ratio de mol de Li: Co: Ni: Mn est 1-1.2:0.4-0.7: 0.2-0.5: 0.1-0.3 à une vitesse de rotation de 500 rpm pendant 60 minutes, frittant à 750-980°C pendant 4-10 heures dans un four de type fournaise, laisser refroidir de façon naturelle jusqu'à la temperature ambiante et microniser à une pression d'air de 0.4-1.0 Mpa pour obtenir le susdit polycrystallin Co-Ni-Mn ternaire matériel électrode-positif ; ou
preparation du susdit polycrystallin Co-Ni-Mn ternaire matériel électrode-positif en frittant un produit fini : frittant Li_{z}CoO₂, Li_{z}NiO₂, Li_{z}MnO₂, Li_{z}Co_{1- (x+y)} NiₓMn_{y}O₂, Li_{z}NiₓMn₁₋xO₂, Li_{z}CoₓNi₁₋ₓO₂ et Li₂MnO₃ respectivement à 850-980°C pendant 5-10 heures dans un four de type fournaise, microniser à une pression d'air de 0.5 Mpa, grader à la passoire en égouttant l'échantillon pour obtenir des particules de taille D50 c'est à dire 8-20 µm, en mélangeant au moins deux parmi le groupe consistant Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ et Li₂MnO₃ avec un ratio de mol de Li: Co: Ni: Mn is 1-1.2:0.4-0.7: 0.2-0.5: 0.1-0.3, frittant à 350-850°C for 0.5-5 heures dans un four de type fournaise, microniser à une pression d'air de 0.4-1.0 Mpa pour obtenir le susdit polycrystallin Co-Ni-Mn ternaire matériel électrode-positif.

2. La méthode tel que décrite dans la requête 1, alors que le susdit composé salin de Co, Ni et Mn est sélectionné parmi le groupe consistant en composés hydroxyliques, oxalate et carbonate de Co, Ni et Mn.

3. La méthode tel que décrite dans la requête 2, comprend de surcroît une procédure de gradation par égouttement à la passoire dans le but de controller la taille des particules D50 à 8-20 µm suite au processus de micronisation.

4. Méthode de preparation d'un polycrystallin Co-Ni-Mn ternaire matériel électrode-positif , comprenant les étapes de :
1) preparation d'un précurseur :
preparation d'une solution aqueuse de nitrate 16 wt % contenant 0.5-1.0 mol de nitrate avec au moins l'un parmi eux de Co, Ni et Mn, ajouter 10-25 wt % de nitrate de lithium contenant 1.0-1.2 mol Li, suite à une reaction de 60-120 minutes, faire sécher et déshydrater à 150-250°C pendant 2-10 heures dans un four de type fournaise, moudre / triturer à une vitesse de rotation de 200-1000 rpm pendant 30 minutes à fin d'obtenir un oxide précurseur sélectionné parmi le groupe consistant en Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ et Li₂MnO₃, où x, y, x+y< 1, z≥1; et
2) preparation du susdit polycrystallin Co-Ni-Mn ternaire matériel électrode-positif :
préparation du susdit polycrystallin Co-Ni-Mn ternaire matériel électrode-positif par frottage du dit précurseur : en mélangeant au moins deux oxydes précurseurs dans le groupe consistant Li_{z}CoO₂, Li_{z}NiO₂, Li_{z}MnO₂, Li_{z}Co_{1-(x+y)} NiₓMn_{y}O₂, Li_{z}NiₓMn₁₋ₓO₂, Li_{z}CoₓNi₁₋ₓO₂ et Li₂MnO₃ avec un ratio de mol de Li: Co: Ni: Mn est 1-1.2:0.4-0.7: 0.2-0.5: 0.1-0.3, en mélangeant de façon uniforme et triturant à une vitesse de rotation de 200-1000 rpm pendant 60 min, frittant à 750-950°C pendant 5-15 heures dans un four de type fournaise, laisser refroidir de façon naturelle jusqu'à la temperature ambiante et and microniser à une pression d'air de 0.4-1.0 Mpa pour obtenir le susdit polycrystallin Co-Ni-Mn ternaire matériel électrode-positif ; ou
préparation du susdit polycrystallin Co-Ni-Mn ternaire matériel électrode-positif en par frittage d'un intermédiaire : en frittant Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ et Li₂MnO₃ respectivement à 600-850°C pendant 5-15 heures dans un four de type fournaise, moudre et mélanger au moins deux précurseurs frittés à sélectionner parmi le groupe consistant en Li_{z}CoO₂, Li_{z}NiO₂, Li_{z}MnO₂, Li_{z}Co_{1- (x+y)} NiₓMn_{y}O₂, Li_{z}NiₓMn₁₋xO₂, Li_{z}CoₓNi₁₋ₓO2 et Li₂MnO₃ avec un ratio de mol de Li: Co: Ni: Mn est 1-1.2:0.4-0.7 : 0.2-0.5: 0.1-0.3 à une vitesse de rotation de 500 rpm pendant 60 minutes, frittage à 750-980°C pendant 4-10 heures dans un four de type fournaise, laisser refroidir de façon naturelle jusqu'à la temperature ambiante et and microniser à une pression d'air de 0.4-1.0 Mpa pour obtenir le susdit polycrystallin Co-Ni-Mn ternaire matériel électrode-positif ; ou
préparation du susdit polycrystallin Co-Ni-Mn ternaire matériel électrode-positif en par frittage d'un produit fini : en frittant du Li_{z}CoO₂, Li_{z}NiO₂, Li_{z}MnO₂, Li_{z}Co_{1-(x+y)} NiₓMn_{y}O₂, Li_{z}NiₓMn₁₋xO₂, Li_{z}CoₓNi₁₋ₓO₂ et/ou du Li₂MnO₃ respectivement à 850-980°C pendant 5-10 heures dans un four de type fournaise, microniser à une pression d'air de 0.5 Mpa, grader à la passoire en égouttant l'échantillon pour obtenir des particules de taille D50 c'est à dire 8-20 µm, mélanger au moins deux parmi le groupe consistant en Li_{z}CoO₂, Li_{z}NiO₂, Li_{z}MnO₂, Li_{z}Co_{1-(+ y)} NiₓMn_{y}O₂, Li_{z}NiₓMn₁₋xO₂, Li_{z}CoₓNi₁₋ₓO₂ et Li₂MnO₃ avec un ratio de mol de Li: Co: Ni: Mn is 1-1.2:0.4-0.7: 0.2-0.5: 0.1-0.3, frittage à 350-850°C pendant 0.5-5 heures dans un four de type fournaise, microniser à une pression d'air de 0.4-1.0 Mpa pour obtenir le susdit polycrystallin Co-Ni-Mn ternaire matériel électrode-positif.

5. La méthode tel que décrite dans la requête 4, comprend de surcroît une procédure de gradation par égouttement à la passoire dans le but de controller la taille des particules D50 to 8-20 µm suite au processus de micronisation.
